(19) **Europäisches Patentamt / European Patent Office / Office européen des brevets**

(11) **EP 3 406 689 A1**

(12) **EUROPEAN PATENT APPLICATION**
published in accordance with Art. 153(4) EPC

(43) Date of publication:
**28.11.2018 Bulletin 2018/48**

(21) Application number: **16718597.4**

(22) Date of filing: **22.01.2016**

(51) Int Cl.:
***C09K 5/06*** (2006.01)

(86) International application number:
**PCT/BR2016/050008**

(87) International publication number:
**WO 2017/124161 (27.07.2017 Gazette 2017/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicants:
- **Natura Cosméticos S.A.**
  **05106-000 São Paulo - SP (BR)**
- **Instituto De Pesquisas Tecnológicas Do Estado De**
  **São Paulo S.A. - IPT**
  **05508-901 São Paulo - SP (BR)**

(72) Inventors:
- **BUCCHI ALENCASTRE MOROZ, Juliana**
  **05106-000, Sao Paulo, SP (BR)**
- **CHU YAN LING OKUDA, Jenny**
  **05106-000, Sao Paulo, SP (BR)**
- **NETO PEREIRA CERIZE, Natalia**
  **05508-900 São Paulo - SP (BR)**
- **LANIGRA GUIMARÃES, Kleber**
  **05508-900 São Paulo - SP (BR)**
- **MARIM DE OLIVEIRA, Adriano**
  **05508-900 São Paulo - SP (BR)**
- **AMBROZIO ZANIN, Maria Helena**
  **05508-900 São Paulo - SP (BR)**
- **ARAGÃO HOROIWA, Thaís**
  **05508-900 São Paulo - SP (BR)**
- **HESPPORTE IWAMOTO, Leilane**
  **05508-900 São Paulo - SP (BR)**

(74) Representative: **Abel & Imray**
**Westpoint Building**
**James Street West**
**Bath BA1 2DA (GB)**

(54) **NANOENCAPSULATED TEMPERATURE REGULATING AGENT (NTRA)**

(57) The present invention relates to a nanoencapsulated temperature regulating agent which presents a nanoencapsulated temperature regulating agent (ARTN/NTRA) that aggregates, in a same nanostructure, an organic material capable of undergoing melting by absorbing heat, or solidification by releasing heat, and IR radiation screening nanoparticles, a colloidal oxide capable of reflecting the infrared radiation which causes surfaces exposed to a heat source to heat up. The NTRA produced may be either in the form of a colloidal dispersion in an aqueous medium or in the form of nanoparticles, if the aqueous dispersion of the NTRAs is subjected to any drying process such as spray-drying, fluidized-bed drying, filtration, lyophilization, centrifugation, inter alia.

The association of temperature regulating mechanisms and the fact that the NTRA is on a nanometric scale imparts greater efficiency for heat transfer processes and surface-covering power, guaranteeing greater reflection of infrared radiation. By virtue of its versatility and different forms of presentation, this NTRA makes it possible to obtain different types of products for use in the cosmetics, pharmaceuticals, medical equipment, prostheses, textiles, paints, coatings, composites, packaging, civil engineering, electrical or electronic equipment, automobile and paper-making industries

EP 3 406 689 A1

FIGURE 1

**Description**

FIELD OF ACTUATION

The invention belongs to the sector of materials for the production of heat or cold by chemical reactions other than combustion, the thermal effect being accompanied by a change in the liquid physical state to the solid state or vice-versa, containing organic and inorganic active ingredients that promote temperature regulation by using two physical principles associated in the same nanostructure of the nanocapsule type: the change in phase by melting/solidification of an organic material and the reflection of the infrared radiation present in the white light that falls onto the nanostructure containing the nanostructured temperature regulating agent. This nanoencapsulated temperature regulating agent exhibits a shell-core type morphology constituted by a core formed by an organic material subject to melting/solidifying and IV radiation filter nanoparticles, and these may be incorporated within the nanostructure together with the organic material or in the surface of the nanostructure constituting a part of the shell, depending of this morphology of the synthesis method employed. This nanoencapsulated temperature regulating agent can be applied in generating products related to the areas of cosmetics, pharmaceutics, medical equipment, prostheses, textiles, paints, coatings, composites, packages, civil construction, electric or electronic equipments, automobile industry and paper-making.

PRIOR ART

The search for better quality of life to the human being is a goal that permeates almost all the activities of the industry and trade. In this search for more favorable living conditions, one points out the comfort provided by buildings, clothes, vehicles and many other products that promote protection and decrease stress and fatigue in the daily activities of man. In the scenario of variables that exist in the concept of comfort for man, the search for better conditions in thermal comfort stands out, which is represented by methods or products that minimize the variations in temperature in the environments, objects, clothes or even applied to the skin itself.

The need for thermal comfort for the human being is a condition relating to the functioning of his organism, which in a simplistic manner might be compared to a machine that has the need to exchange the heat generated by its activity or preserve the heat to keep this activity. When the exchange of heat between the environment and man takes place without the need to actuate mechanisms, such as perspiration or the excessive use of protection (coats, for example), a feeling of thermal comfort is generated and the individual has its maximum capacity of activity or work.

The thermal comfort is strongly related to temperature, humidity, air velocity and sunlight incidence, besides the influence of the rainfall, vegetation, permeability of the soil, surface and underground waters and topography.

The heat exchange processes and the consequent regulation of temperature are based on different mechanisms, such as conduction, convection and radiation, and the human body still counts upon perspiration and breathing. Among these mechanisms, the most relevant ones to be controlled artificially for generating thermal comfort are conduction, convection and radiation, the latter standing out.

There are a number of methods for controlling the heat-exchange processes in order to provide thermal comfort, and in many cases there is a need for sources of electric energy to drive the cooling systems or heat exchangers. An alternative to temperature control is the use of materials that absorb or release heat related to their melting or solidifying process, which is related to the heat exchange processes by conduction or by convection, or the use of solid particles that reflect infrared radiation preventing it from coming into contact with the bodies, thus preventing them from heating up, or else preventing them from losing radiation of this type, promoting their cooling.

Materials that can be used as temperature regulators, based on the melting/solidifying process, that is to say, based on their latent heat, may be of the organic or inorganic type, wherein for organic materials, waxes and parafins stand out, and for inorganic materials a few salts or eutectic mixtures of salts and water stand out. However, in different applications in which temperature regulating materials are employed, they need to be encapsulated, so that during the melting process they will not spread through the substrate on which they are applied or permeate through the skin in the case of cosmetic products, and so they can keep their main characteristic, which is that of absorbing and releasing heat in a cyclic manner and with the same thermal efficiency of melting and solidification enthalpy.

A few documents demonstrated the possibility and feasibility of using these materials to regulate temperature or store renewable energy in a simple and economical manner, among which stands out US 20070224899 (Particulate compositions and their manufacture), which presents a method and composition for generating capsules containing hydrophobic material inside them, among which are materials that undergo melting/solidification as mechanisms of storing or regulating thermal energy, as for example, greases and paraffin. Further, other documents that stand out are: US 20090236079 (Nanoparticle-enhanced phase change materials (NEPCM) with great potential for improved thermal energy storage) and US 7919184 (Hybrid nanoparaticles) and KR 20130067128 (Complex particles of phase change materials and conductive filler for a heat control material and its preparing method), where one presents the use of organic materials encapsulated in polymeric micro/nanocapsules, and documents US 20090236079 (Nanoparticle-enhanced phase change materials (NEPCM) with great potential for improved thermal energy storage) and US 7919184 (Hybrid nanoparticles) as energy storage agent as a function of their melting/solidification and the association of metallic nanoparticles to increase the rate of transfer of heat between nanocapsules and the environment or the surface on which they are applied.

The use of particles as a means to reflect infrared radiation is already known and can be exemplified by the paper of Bendiganavale, Ashwini K. and Malshe, Vinod C. (INFRARED REFLECTIVE INORGANIC PIGMENTS, Recent Patents on Chemical Engineering, 2008, 1, 67-79) and in document US 2013/0216834 (Zinc oxide and cosmetic). In this last document one describes the use of zinc-oxide microparticles for the production of cosmetics, which exhibit different functions, among which is reflectance of infrared radiation.

The prior art reports the feasibility of constructing particles filled with PCMs (Phase Change Materials) that might be used in storing thermal energy; however, no document mentions the possibility of constructing nanoparticles containing a mixture of PCM and IV radiation filter, a colloidal oxide, which together confer the absorption/release of energy for the purpose or regulating the temperature of a surface and, still, with the presence of the colloidal oxide in the same nanostructure having the function of reflecting infrared radiations, potentiating the temperature regulating effect of the product presented by this invention, that is, imparting, in the same nanostructure, temperature controlling mechanisms for the three main forms of heat exchange: conduction, convection and radiation, thus constituting its novelty and inventive activity.

SUMMARY OF THE INVENTION

The nanoencapsulated temperature regulating agent of the present invention is a nanoencapsulated temperature regulating agent (ARTN/NTRA) that aggregates, in a same nanostructure, an organic material capable of undergoing melting by absorption of heat, or solidifying by release of heat, and nanoaprticles of an IV radiation filter, a colloidal oxide, capable of reflecting infrared radiation, responsible for the heating of surfaces exposed to a source of heat.

The NTRA produced may be in the form of a colloidal dispersion in an aqueous medium or in the form of nanoparticle, if the aqueous dispersion of the NTRAs is subjected to same drying process like spray-drying, fluidized-bed drying, filtration, lyophilization, centrifugation, among others.

The association of temperature regulating mechanisms and the fact that the NTRA is on nanometric scale impart greater efficiency in the heat transfer processes and power to cover a surface, guaranteeing greater reflection of infrared radiation. Due to its versatility and different forms of presentation, this NTRA enables one to obtain different types of products for application in the industries of cosmetics, pharmaceutics, medical equipment, prostheses, textiles, paints, coatings, composites, packages, civil construction, electric or electronic equipment, automotive industry and paper-making.

DESCRIPTION OF THE FIGURES

Figure 1 shows an illustrative scheme of the action mechanism proposed for the nanoencapsulated temperature regulating agent, showing the polymer shell (1), the PCM core with IV radiation filter (2), the polymer shell with IV radiation filter (3) and the PCM core (4).

Figure 2 shows a photograph of a plate containing the product after exposure to the temperature of 40°C in an air circulation oven (Example 1).

Figure 3 shows a photomicrograph of the nanostructured product of Example 1.

Figure 4 shows a DSC curve of 20 consecutive heating and cooling cycles of the nanoencapsulated product of Example 1.

Figure 5 shows a photograph of a plate containing the product after exposure to the temperature of 40°C in an air circulation oven (Example 2).

Figure 6 shows a photomicrograph of the nanoencapsulated product of Example 2.

Figure 7 shows the graph of consecutive scannings of dynamics turbidity (stability) of the nanoencapsulated product of Example 2.

Figure 8 shows a photograph of a plate containing the product after reaction, exposed to the temperature of 40°C in an air circulation oven (Example 3).

Figure 9 shows a photomicrograph of the nanoencapsulated product of Example 3;

Figure 10 shows a photograph of a slide containing the product after reaction, exposed to the temperature of 40 °C in an air circulation oven (Example 4).

Figure 11 shows a photomicrograph of the nanoencapsulated product of Example 4.

Figure 12 shows a photograph of a plate containing the product after reaction, exposed to the temperature of 40°C in an air circulation oven (Example 5).

Figure 13 shows a photomicrograph of the nanoencapsulated product of Example 5.

Figure 14 shows consecutive scannings of dynamics turbidimetry (stability) of the nanoencapsulated product of Example 5.

Figure 15 shows a photograph of a plate containing the product after reaction, exposed to the temperature of 40°C in an air circulation oven (Example 6).

Figure 16 shows a photomicrograph of the nanoencapsulated product of Example 6.

Figure 17 shows consecutive scannings of dynamics turbidimetry of the nanoencapsualted product of Example 6.

Figure 18 shows a photograph of a plate containing the products after reaction, exposed to the temperature of 40°C in an air circulation oven (Example 7).

Figure 19 shows a photomicrograph of the nanoencapsulated product of Example 7.

Figure 20 shows a graph of the DSC curve showing 20 consecutive heating and cooling cycles of the nanoencapsualted product of Example 7.

Figure 21 shows a graph of turbidimetry of the sample of nanoencapsulated PCM of Example 8.

Figure 22 shows a photograph of a plate containing the product after reaction, exposed to the temperature of 40°C in an oven (Example 8).

Figure 23 shows a photomicrograph obtained by scanning electron microscopy of the thermofunctional nanostructure of Example 8.

Figure 24 shows the graph of evaluation of 20 heating and cooling cycles by DSC (Example 8).

Figure 25 shows a graph of turbidimetry of the sample of nanoencapsulated PCM of Example 9.

Figure 26 shows a photograph of a plate containing the product after reaction, exposed to the temperature of 40°C in an oven (Example 9).

Figure 27 shows a photomicrograph obtained by scanning electron microscopy of the thermofunctional nanostructure of example 9.

Figure 28 shows the graph of evaluation of 20 heating and cooling cycles by DSC (Example 9).

Figure 29 shows the graph of the reflection of infrared radiation by the infrared spectroscopy with Courier transform (FTIR) of the samples of Examples 1 and 2.

Figure 30 shows a photograph of the suspension of the thermofunctional nanostructaure diluted at 5 ppm, synthetized without zinc oxide (A) as compared with the same thermofunctional nanostructure with zinc oxide infrared radiation filter (B) of Example 10.

Figure 31 shows the graph of the reflection of the infrared radiation by the infrared spectroscopy technique with Courier transform (FTIR) of the samples of Examples 8 and 9.

DETAILS OF THE INVENTION

The nanoencapsulated temperature regulating agent of the present invention is an approach to generating thermal regulation systems without utilizing electric power, i.e., that makes use of mechanisms of melting/solidifying mechanisms for heat exchange material and also the use of materials that promote infrared radiation reflection, responsible for heating up or cooling down objects, surfaces or bodies.

This nanoencapsulated temperature regulating agent presents a nanocapsule type of morphology constituted by a core formed by organic material likely to be melted/solidified, and the IV radiation filter nanoparticles can be incorporated into the interior of the nanostructure together with the organic material or into the surface of the nanostructure forming part of the shell, the method of synthesis utilized depending upon said morphology.

The organic material responsible for the process of heat absorption or release by melting/solidification can be wax, butter, paraffin, salt or soluble polymer or blends thereof which melting/solidification point ranges between 10 and 120 °C, preferably between 29 and 32 °C. The colloidal oxide to be employed shall have an average particle size lower than 200 nm, preferably lower than 50 nm.

The IV radiation filter can be a titanium-, silica- or zinc-based colloidal oxide, preferably zinc. The nanocapsules are formed *in situ* during the nanoencapsulation process using preformed polymers, functional ethylene monomers or bifunctional monomers that polymerize via a polycondensation or polyaddition mechanism. The monomer to be employed to form the shell and to generate the NTRA must be of the cyanoacrylate type, preferably butyl-cyanoacrylate. The mass ratio of the organic material / colloidal oxide nanoparticle / monomer may range between 47: 35: 16 and 92: 0.01: 7.99, preferably 73 : 15: 12. The active material content (organic material) present in the organic phase may range between 5 and 35%, preferably 28% by mass.

The nonionic emulsifier and the protective colloid employed in the synthesis of the product can be the those derived from poly(ethylene oxide).

Optionally, the resulting product can be dried, in the event the aqueous dispersion of the NTRAs is subjected to some drying process like spray-drying, fluidized bed drying, filtration, lyophilization, centrifugation, among others.

The product generated in this invention has the following characteristics: average particle size ranging from 50 to 3,000 nm, preferably from 150 to 300 nm, pH variation from 2.0 to 10.0, preferably 4.2; solids content from 5.0 to 50.0%, preferably 34%, spherical morphology and, when dried, having a powder-like aspect, partially agglomerated or in the form of dispersed particles, and of easy re-dispersion in aqueous medium.

Some examples of illustrative embodiments of the instant invention are found below. The products generated in the examples were characterized according to their average particle size, zeta potential, morphology, pH, colloidal physical stability and total solids content.

EXAMPLES

EXAMPLE 1: Nanoencapsulated Temperature Regulating Agent with a ratio of 86% / 14% by mass of organic material / monomer

In a jacketed glass reactor and bottom outlet 28.90 g of ethyl acetate, 1.3 g of sorbitan laurate (80 moles of ethylene oxide), 1.64 g of triblock copolymer of poly (ethylene oxide) - poly (propylene oxide) - poly (ethylene oxide) and 9.89 g of triglycerides of fatty acids of vegetal origin were included. After the wax melted, 1.64 g of butyl-cyanoacrylate was added.

The aqueous phase utilized in the pre-emulsification (AP-1) was prepared with 12.65 g of distilled water, 1.25 g of sodium lauryl ether sulfate (SLES) and 1.3 g of ethyl acetate; and the second aqueous phase to be utilized in the dilution of the pre-emulsion (AP-2) was comprised only of 41.5 g of distilled water.

The nanoencapsulated product obtained was subjected to the characterizations of particle size by dynamic light scattering, pH by potentiometry, morphology by scanning electron microscopy, total solids content by thermogravimetric analysis and thermoanalysis by differential scanning calorimetry (DSC).

Table 1 shows the results for average particle size, pH and total solids content. As noticed, the solids content was 27.63% by mass, the average particle size was 261.3 nm and pH was 6.69.

Table 1: Results obtained with the product produced according to the experimental conditions of Example 2.

| Total Solids Content (% m/m) | pH | Average Particle Size (nm) |
|---|---|---|
| 27.63 | 6.69 | 261.3 |

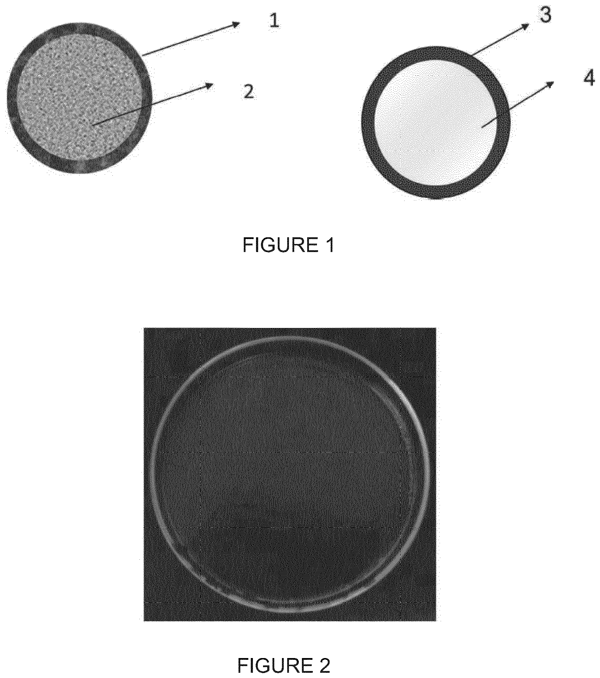

Figure 2 displays a photograph of a plate containing the product after reaction, exposed to a temperature of 40 °C in an air circulation greenhouse. As we can see, the aspect of the sample is "dry", i.e., without the presence of melted organic material, which is melted at 32 °C, indicating that it was nanoencapsulated by the interfacial polymerization process.

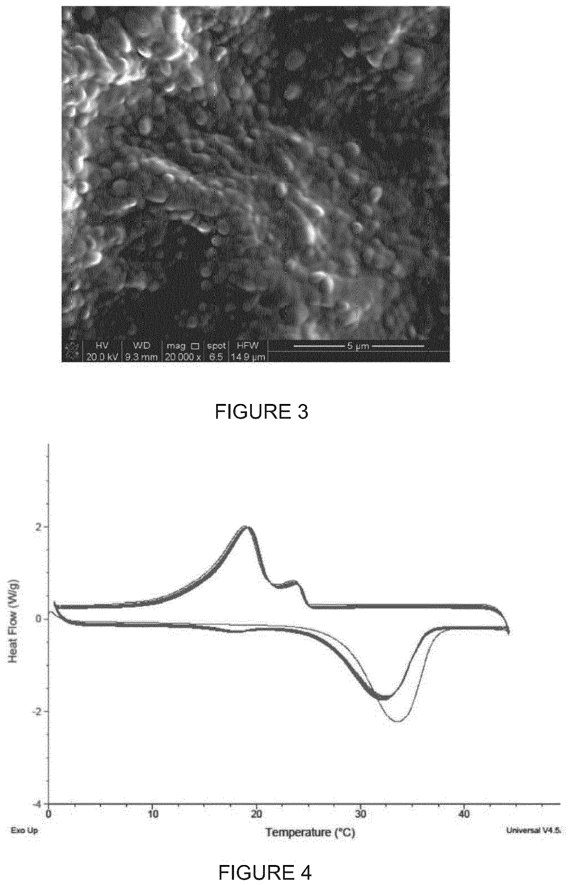

Figure 3 displays a photomicrograph of the nanoencapsulated product and, as one can notice, the particle size was measured in nanometric scale.

Figure 4 displays the DSC curve for the sample of the nanoencapsulated sample, showing consecutive heat and cooling cycles and evincing that the enthalpy of fusion of the material does not undergo significant changes, which proves that the nanocapsules exhibit a cyclic energy absorption effect.

EXAMPLE 2: Nanoencapsulated Temperature Regulating Agent with a ratio of 73% / 12% / 15% by mass of organic material / monomer / colloidal oxide

In a jacketed glass reactor and bottom outlet 12 g of ethyl acetate, 1.7 g of sorbitan laurate (80 moles of ethylene oxide), 2 g of triblock copolymer of poly (ethylene oxide) - poly (propylene oxide) - poly (ethylene oxide) and 12 g of triglycerides of fatty acids of vegetal origin were added. After the wax melted, 2.5 g of zinc oxide dispersed in 10 g of ethyl acetate were added as well as 2 g of butyl-cyanoacrylate. The aqueous phase utilized in the pre-emulsification (AP-1) was prepared with 17 g of distilled water, 1.5 g of sodium lauryl ether sulfate (SLES) and 1.5 g of ethyl acetate.

The nanoencapsulated product obtained was subjected to the characterizations of particle size by dynamic light scattering, pH by potentiometry, morphology by scanning electron microscopy, colloidal physical stability by dynamic scanning turbidimetry and total solids content by thermogravimetric technique.

Table 2 shows the results for average particle size, pH and total solids content. As noticed, the solids content was 33.8% by mass, the average particle size was 253.8 nm and pH was 8.2.

Table 2: Results obtained with the product produced according to the experimental conditions of Example 2.

| Total Solids Content (% m/m) | pH | Average Particle Size (nm) |
|---|---|---|
| 33.8 | 8.2 | 253.8 |

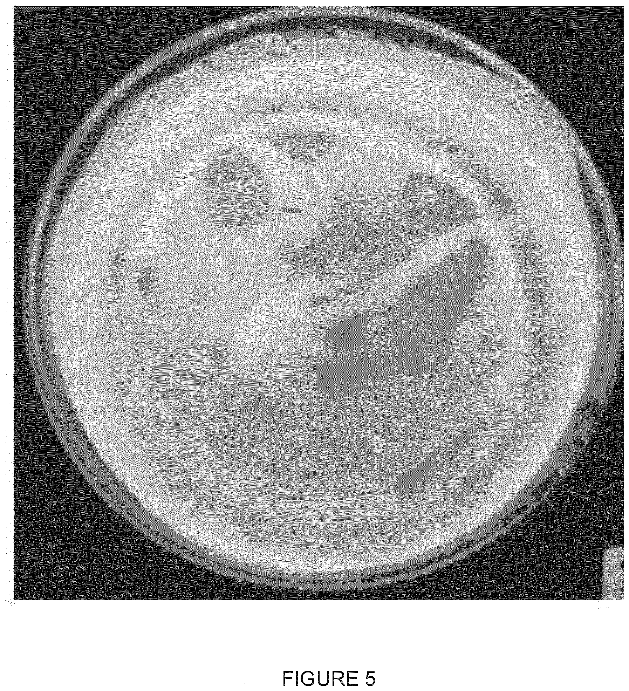

Figure 5 displays a photograph of a plate containing the product after reaction, exposed to a temperature of 40 °C in an air circulation greenhouse. As one can see, the aspect of the sample is "dry", i.e., without the presence of molten organic material, which is melted at 32 °C, indicating that it was nanoencapsulated by the interfacial polymerization process.

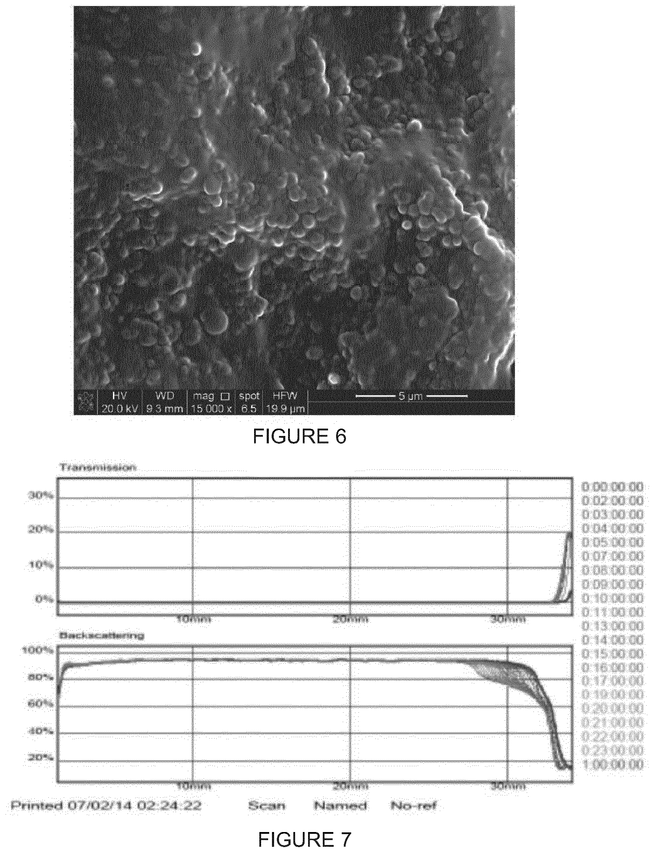

Figure 6 displays a photomicrograph of the nanoencapsulated product and, as one can notice, the particle size was measured in nanometric scale.

Figure 7 displays a dynamics turbidimetriy image of the sample, analyzed for 24 consecutive hours after the sample was prepared, with scanning being performed throughout the sample holder each hour. As one can see, colloidal physical stability was noticed through time, without difference in the light backscattering of the sample in the periods of time assessed.

EXAMPLE 3: Nanoencapsulated Temperature Regulating Agent with a ratio of 57% / 19% / 24% by mass of organic material / monomer / colloidal oxide

In a jacketed glass reactor provided with a bottom outlet 12 g of ethyl acetate, 1.7 g of sorbitan laurate (80 moles of ethylene oxide), 2 g of triblock copolymer of poly (ethylene oxide) - poly (propylene oxide) - poly (ethylene oxide) and 6 g of triglycerides of fatty acids of vegetal origin were included. After the wax melted, 2.5 g of zinc oxide dispersed in 10 g of ethyl acetate were added under ultrasound stirring for 10 minutes and 2 g of butyl-cyanoacrylate were added too. The aqueous phase used in the pre-emulsification (AP-1) was prepared with 17 g of distilled water, 1.5 g of sodium lauryl ether sulfate (SLES) and 1.5 g of ethyl acetate.

The nanoencapsulated product obtained was subjected to the characterizations of particle size by dynamic light scattering, pH by potentiometry, morphology by scanning electron microscopy, and total solids content by thermogravimetric analysis.

Table 3 shows the results of average particle size, pH, total solids content. As can be observed, the solids content was approximately 33.8% by mass and the mean particle size was 281.0 nm and pH 8.3.

Table 3: Results obtained with the product produced according to the experimental conditions of Example 3.

| Total Solids Content (% m/m) | pH | Particle Average size (nm) |
|---|---|---|
| 33.8 | 8.3 | 281.0 |

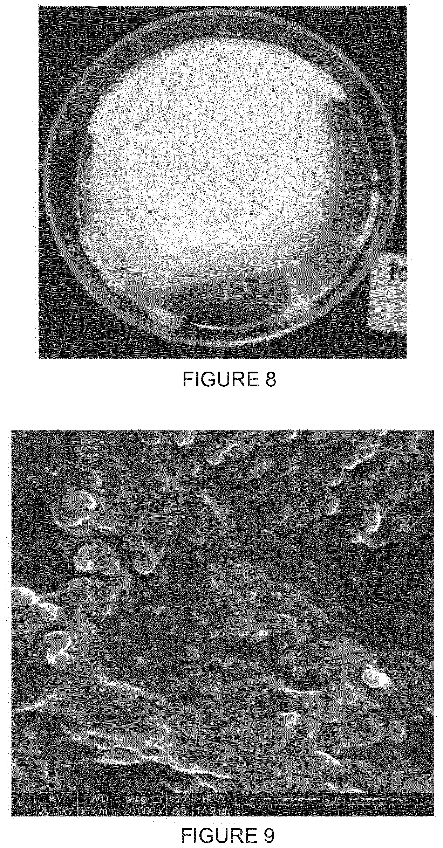

Figure 8 is a photograph of a plate containing the product after reaction, exposed to a temperature of 40°C in an air circulation greenhouse. As can be seen, the appearance of the sample is "dry", i.e. without the presence of molten organic material, which undergoes melting at 32°C, indicating that it was nano-encapsulated by interfacial polymerization process.

Figure 9 shows a photomicrograph of the nanocapsules and, as can be seen, the particle size was in the nanometer scale.

EXAMPLE 4: Nanoencapsulated Temperature Regulating Agent with a ratio of 80% / 9% / 11% by mass of organic material/ monomer/ colloidal oxide

In a jacketed glass reactor with a bottom outlet, 12 g ethyl acetate, 1.7 g sorbitan laurate (80 moles of ethylene oxide), 2 g triblock copolymer of poly(ethylene oxide) - poly (propylene oxide) - poly (ethylene oxide) and 18 g triglycerides of fatty acids of vegetable origin were included. After the wax was melted, it was added 2.5 g of zinc oxide sigma dispersed in 10 g ethyl acetate and then 2 g butylcyanocrylate, 1.5 g sodium lauryl ether sulfate (SLES) and 1.5 g ethyl acetate were added.

The nanoencapsulated product obtained was subjected to particle size characterization by dynamic light scattering technique, pH by potentiometry, morphology by scanning electron microscopy technique, and the content of total solids by thermogravimetric technique.

Table 4 shows the results of average particle size, pH, total solids content. As can be observed, the solids content was approximately 36.4 % by mass and the mean particle size was 244.3 nm and pH 8.3.

Table 4: Results obtained with the product produced according to the experimental conditions of Example 4.

| Total Solids Content (% m/m) | pH | Particle Average size (nm) |
|---|---|---|
| 36.4 | 8.3 | 244.3 |

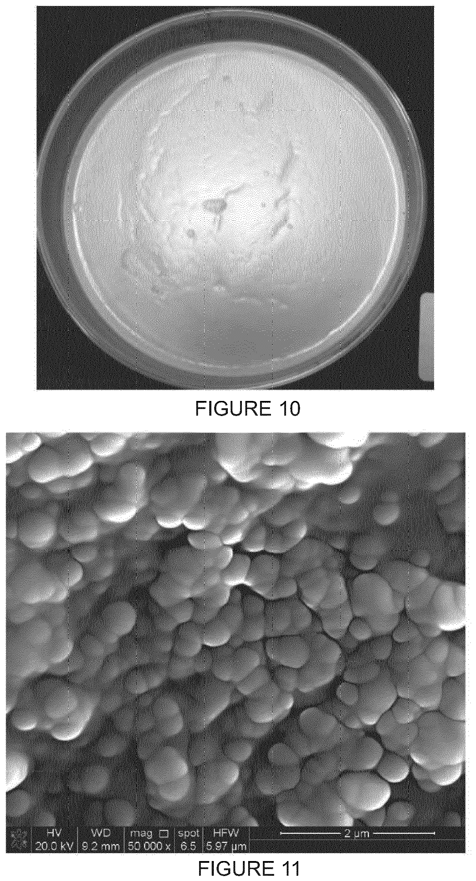

Figure 10 is a photograph of a plate containing the product after reaction, exposed to a temperature of 40°C in an air circulation greenhouse. As can be seen, the appearance of the sample is "dry", i.e. without the presence of molten organic material, which undergoes melting at 32°C, indicating that it was nanoencapsulated by interfacial polymerization process.

Figure 11 shows a photomicrograph of the nanocapsules and, as can be seen, the particle size was in the nanometer scale.

EXAMPLE 5: Nanoencapsulated Temperature Regulating Agent with a ratio of 52% / 30% / 18% by mass of organic material / monomer / colloidal oxide

In jacketed glass reactor with a bottom outlet, 17 g ethyl acetate, 1.7 g sorbitan laurate (80 moles of ethylene oxide), 2 g triblock copolymer of poly(ethylene oxide) - poly (propylene oxide) - poly (ethylene oxide) and 6 g triglycerides of fatty acids of vegetable origin were included. After the wax was melted, 3.5 g of zinc oxide dispersed in 10 g ethyl acetate were added and then 2 g butylcyanocrylate, 1.5 g sodium lauryl ether sulfate (SLES) and 1.5 g ethyl acetate were added.

The nanoencapsulated product obtained was subjected to particle size characterization by dynamic light scattering technique, pH by potentiometry, morphology by scanning electron microscopy technique, colloidal physical stability by dynamic scan turbidity technique and the content of total solids by thermogravimetric technique.

Table 5 shows the results of average particle size, pH, total solids content. As can be observed, the solids content was approximately 29.36% by mass and the mean particle size was 226.8 nm and pH 8.3.

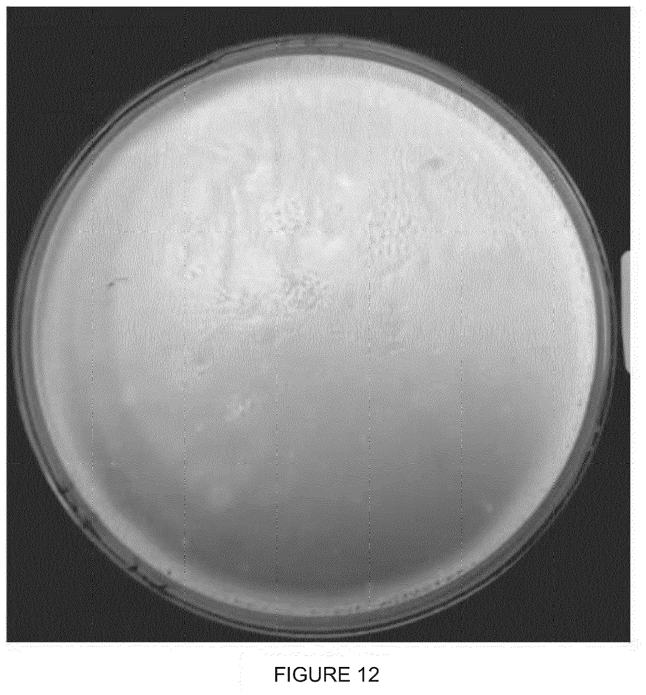

Figure 12 is a photograph of a plate containing the product after reaction, exposed to a temperature of 40°C in an air circulation greenhouse. As can be seen, the appearance of the sample is "dry", i.e. without the presence of molten organic material, which undergoes melting at 32°C, proving that the same was nanoencapsulated by interfacial polymerization process.

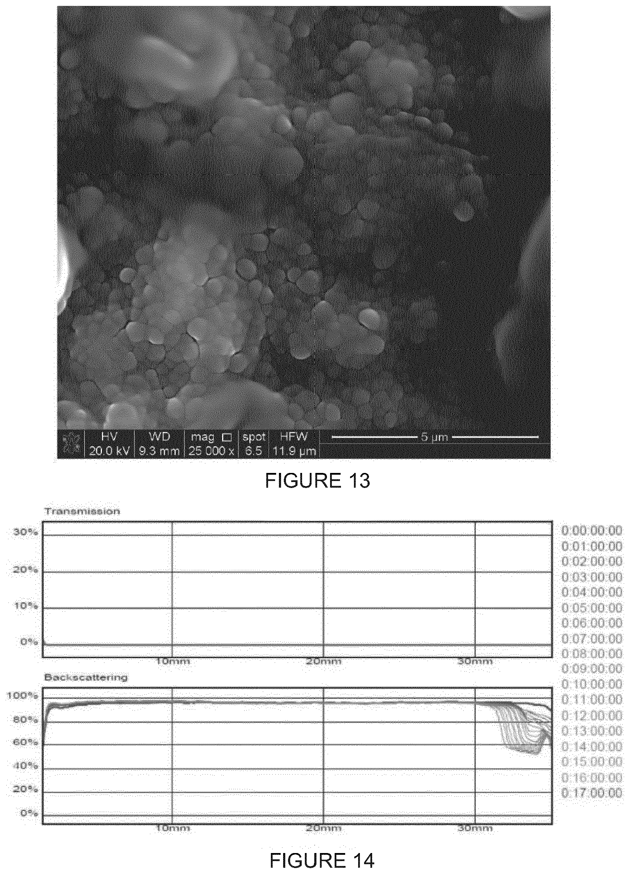

Figure 13 shows a photomicrograph of the nanocapsules and, as can be seen, the particle size was in the nanometer order.

Figure 14 shows a dynamic turbidity image of the sample analyzed for a period of 17 consecutive hours after preparation, performing scans across the specimen holder every hour. As can be seen, there is evidence of a colloid physical stability behavior over time, with no difference in the retro scattering of the light of the sample for the evaluated times.

Table 5: Results obtained with the product produced according to the experimental conditions of Example 1.

| Total Solids Content (% m/m) | pH | Particle Average size (nm) |
|---|---|---|
| 29.36 | 8.3 | 226.8 |

EXAMPLE 6: Nanoencapsulated Temperature Regulating Agent with a ratio of 48% / 36% / 16% by mass of organic material / monomer / colloidal oxide

In jacketed glass reactor with a bottom outlet, 10 g ethyl acetate, 1.7 g sorbitan laurate (80 moles of ethylene oxide), 2 g triblock copolymer of poly(ethylene oxide) - poly (propylene oxide) - poly (ethylene oxide) and 6 g triglycerides of fatty acids of vegetable origin were included. After the wax was melted, 4.5 g of zinc oxide dispersed in 21 g ethyl acetate were added and then 2 g butylcyanocrylate, 1.5 g sodium lauryl ether sulfate (SLES) and 1.5 g ethyl acetate were added.

The nanoencapsulated product obtained was subjected to particle size characterization by dynamic light scattering technique, pH by potentiometry, morphology by scanning electron microscopy technique, colloidal physical stability by dynamic scan turbidity technique and the content of total solids by thermogravimetric technique.

Table 6 shows the results of average particle size, pH, total solids content. As can be observed, the solids content was approximately 31.21% by mass and the mean particle size was 266.0 nm and pH 8.21.

Table 6: Results obtained with the product produced according to the experimental conditions of Example 1.

| Total Solids Content (% m/m) | pH | Particle Average size (nm) |
|---|---|---|
| 31.21 | 8.21 | 266.0 |

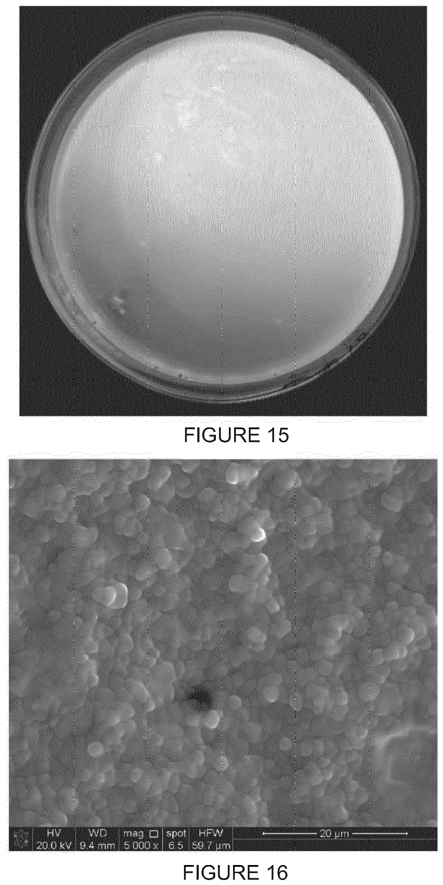

Figure 15 is a photograph of a plate containing the product after reaction, exposed to a temperature of 40°C in an air circulation greenhouse. As can be seen, the appearance of the sample is "dry", i.e. without the presence of molten organic material, which undergoes melting at 32°C, proving that the same was nanoencapsulated by interfacial polymerization process.

Figure 16 shows a photomicrograph of the nanocapsules and, as can be seen, the particle size was in the nanometer order.

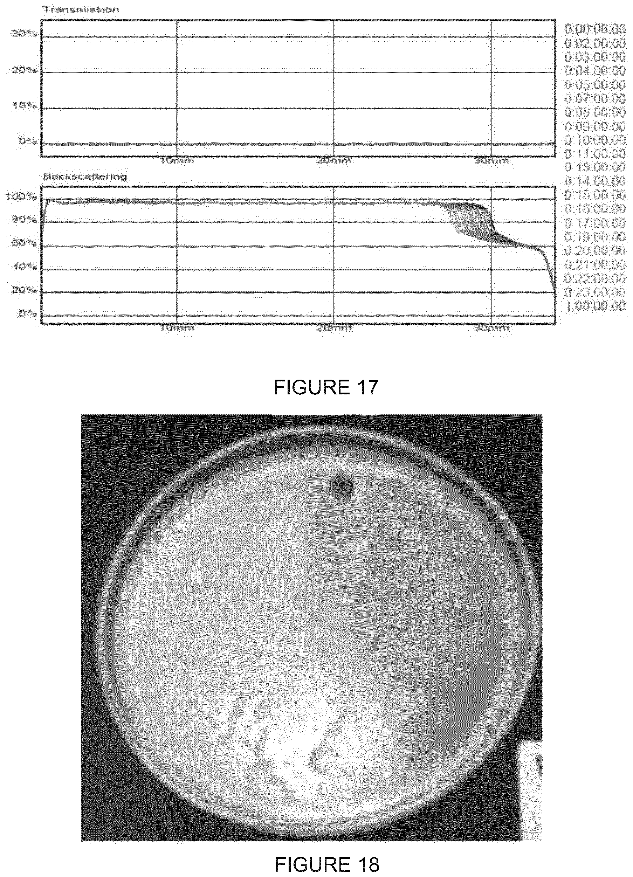

Figure 17 shows a dynamic turbidity image of the sample analyzed for a period of 24 consecutive hours after preparation of the sample, performing scans across the specimen holder every hour. As can be seen, there is evidence of a colloid physical stability behavior over time, with no difference in the retro scattering of the light of the sample for the evaluated times.

EXAMPLE 7: Nanoencapsulated Temperature Regulating Agent with a ratio of 48% / 36% / 16% by mass of organic material / monomer / colloidal oxide

In jacketed glass reactor with a bottom outlet, 12 g ethyl acetate, 1.7 g sorbitan laurate (80 moles of ethylene oxide), 2 g triblock copolymer of poly(ethylene oxide) - poly (propylene oxide) - poly (ethylene oxide) and 12 g triglycerides of fatty acids of vegetable origin were added. After the wax was melted, 1.0 g of zinc oxide dispersed in 10 g ethyl acetate were added and then 2 g butylcyanocrylate, 1.5 g sodium lauryl ether sulfate (SLES) and 1.5 g ethyl acetate were added.

The nanoencapsulated product obtained was subjected to particle size characterization by dynamic light scattering technique, pH by potentiometry, morphology by scanning electron microscopy technique, colloidal physical stability by dynamic scan turbidity technique and the content of total solids by thermogravimetric technique.

Table 7 shows the results of average particle size, pH, total solids content. As noted, the solids content was approximately 31.89% by mass, the average particle size was 226.6 nm and pH 7.9.

Table 7: Results obtained with the product produced according to the experimental conditions of Example 1.

| Total solids content (m/m%) | pH | Average Particle Size (nm) |
|---|---|---|
| 31.89 | 7.9 | 226.6 |

Figure 18 shows a photograph of a plate containing the product after reaction, exposed to a temperature of 40°C in an air circulating greenhouse. As can be noted, the appearance of the sample is "dry", that is, without the presence of molten organic material, which undergoes melting at a temperature of 32°C, indicating that it was nanoencapsulated by interfacial polymerization process.

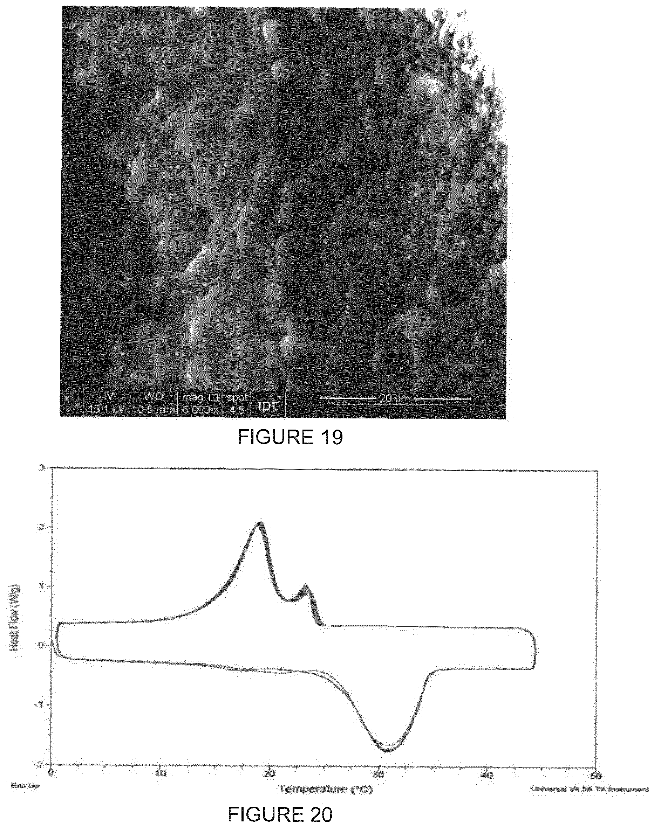

Figure 19 shows a photomicrograph of the nanocapsules and, as can be seen, the particle size was measured in nanometer scale.

Figure 20 shows the DSC-curve for a sample of the nanocapsule having 20 consecutive cycles of heating and cooling, demonstrating that the enthalpy of fusion does not change significantly, wherein the nanocapsules show a cyclic energy absorption effect.

Example 8: Thermo-functional nanostructure with a ratio of 64% / 29% / 7% by mass of organic material/ colloidal oxide/monomer

In a jacketed glass reactor having a bottom outlet maintained at 70 °C, 18.300 g of colloidal silicon dioxide at 30% in water (m/m), 132.70 g of distilled water, 5.50 g of colloidal zinc oxide dispersion at 50% in water (m/m) and 18.200 g of agabse B-15 were added under mechanical stirring of 1000 rpm for 30 minutes, until the entire PCM was molten and a pre-emulsion formed. Said pre-emulsion was subjected to homogenization under a pressure ranging from 50 to 90 MPa (500 to 900 bar) for 5 to 8 cycles in a high-pressure homogenizer, thus forming a nanoemulsion. In said nanoemulsion, 2.01 g of methyl methacrylate and 0.21 g of hydroxy ethyl methacrylate were added and maintained under stirring for 30 minutes in a magnetic stirrer at room temperature. The obtained nanoemulsion was transferred to a jacketed glass reactor having a bottom outlet under a nitrogen-inerted atmosphere, at a temperature of 70 °C and moderate stirring, from 300 to 400 rpm. On the nanoemulsion 0.200 g sodium persulfate P.A. was added. After 2 hours, more 0.100 g of sodium persulfate P.A. was added and after 1 more hour another 0.100 g of sodium persulfate P.A.

was added. After 4 hours of the polymerization process, the sample was transferred to a glass flask immersed in an ice bath, where it was kept under stirring for 30 minutes with the aid of a mechanical stirrer.

The obtained nanoencapsulated product was subjected to characterizations of particle size and zeta potential by dynamic light scattering, morphology by scanning electron microscopy, colloidal physical stability by dynamic scanning turbidimetry, total solids content by thermogravimetry, evaluation of the aspect after drying in the greenhouse, pH, quantification of residual monomer content in the final formulation and thermal profile by differential scanning calorimetry (DSC).

Table 8 shows the results for average particle size, pH and total solids content. As can be noted, the solids content was 12.67% by mass and the average particle size was 332.6 nm, wherein the polydispersity index was 0.271. The monomer residual is less than 0.01% for methyl methacrylate and less than 0.05% for hydroxy ethyl methacrylate.

Table 8 - Results of the product obtained in Example 8.

| Particle size (nm) | IP | ZP | pH | Solids content (%) | Residual Monomer (MMA) | Residual Monomer (HEMA) |
|---|---|---|---|---|---|---|
| 332.6 | 0.271 | -52.30 | 7.07 | 12.67 | <0.01% | <0.05% |

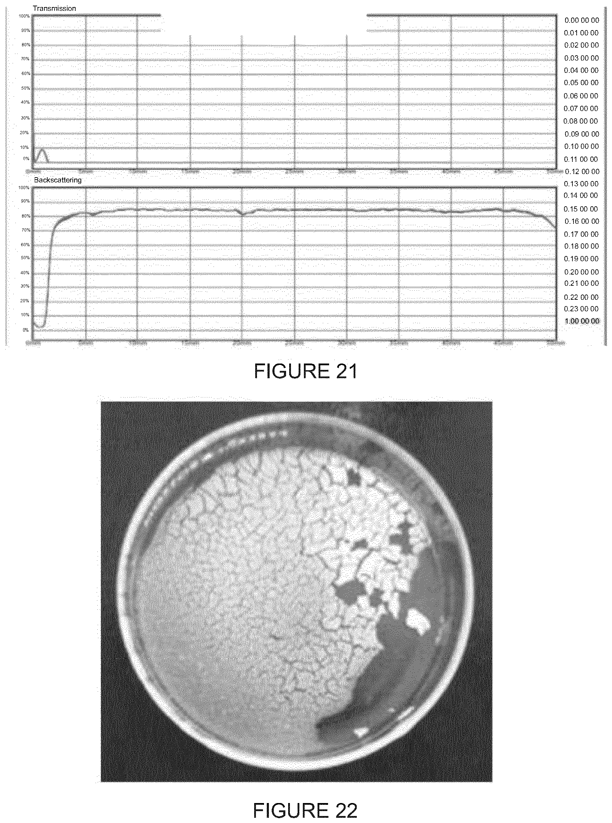

Figure 21 shows turbidimetry curves in function of the position of the sample in the sample holder, observing that the smaller the distance between the curves over the time of analysis, which in this case was 24 hours, the greater the colloidal physical stability of the nanocapsules in the aqueous medium. For this example, the product showed high physical stability in the analyzed period of time.

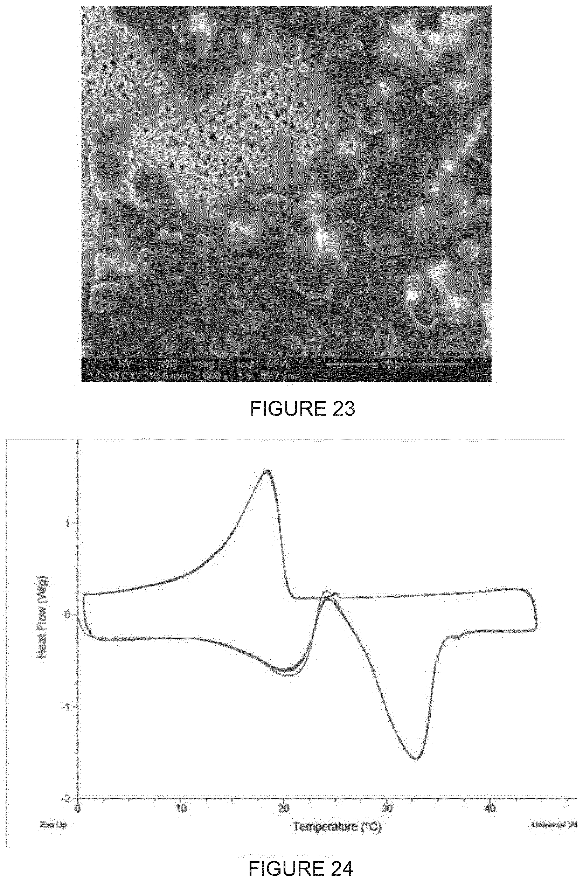

Figure 22 shows a photograph of a plate containing the product after reaction, exposed to a temperature of 40 °C in an air circulation greenhouse, and Figure 23 shows a photomicrograph of the scanning electron microscopy of the thermo-functional nanostructure of Example 8. As we can see, the aspect of the sample is "dry", i.e., without the presence of molten organic material, which is melted at the temperature of 32 °C, indicating that it was nonoencapsulated and, as can also be seen, the size of the particle was measured in nanometers.

Table 8-A shows the results of the evaluation of the thermal profile comprising the start melting temperature, the melting peak temperature and the final melting temperature in addition to the enthalpy normalized by the mass of evaluated nanoencapsulated PCM. The values shown refer to the three cycles of thermal analysis.

Table 8-A - Results of the evaluation of the thermal profile comprising the start melting temperature, the melting peak temperature and the final melting temperature, as well as the normalized enthalpy.

| ID | Cycles | "Onset" (°C) | "Endset" (°C) | Normalized enthalpy (J/g) |
|---|---|---|---|---|
| Thermo-functional nanoestructure Ex 8 (1°C/min) | 1° | 28.62 | 35.59 | -102.10 |
| | 2° | 24.91 | 34.68 | -94.30 |
| | 3° | 24.97 | 34.68 | -93.71 |

Considering the values of enthalpy of fusion of the thermo-functional nanostructure, the encapsulation efficiency value was calculated from the relationship of the normalized enthalpy of fusion of the first heating cycle of the thermo-functional nanostructure of the PCM with the normalized enthalpy of fusion of pure PCM. The encapsulation efficiency was 87.96%, having as reference the enthalpy of pure PCM in the value of 116.07 J/g.

Figure 24 shows an evaluation of 20 heating and cooling cycles by DSC in order to demonstrate the maintenance of thermal property of the thermo-functional structure, evidencing the cyclic effect of PCM when subjected to temperature variations of the external medium (Obs.: It should be noted that the first heating curve has a profile slightly different from the others due to the fact that the solidification of the nanocapsule was not done in a standardized manner, that is, not in equipment, but at room temperature).

Example 9: Thermo-functional nanostructure with a ratio of 70% / 21% / 9% (m/m) organic material / colloidal oxide / monomer

In a jacketed glass reactor having a bottom outlet maintained at 70 °C 18.150 g of colloidal silicon dioxide at 30% in water (m/m), 135.35g of distilled water and 18.010 g of agabase B-15 were added under mechanical stirring of 1000 rpm for 30 minutes, until the entire PCM was molten and a pre-emulsion was formed. Said pre-emulsion was subjected to homogenization under a pressure ranging from 50 to 90 MPa (500 to 900 bar) for 5 to 8 cycles in a high-pressure homogenizer, thus forming a nanoemulsion. In said nanoemulsion 2.03 g of methyl methacrylate and 0.21 g of hydroxy ethyl methacrylate were added and maintained under stirring for 30 minutes in a magnetic stirrer at room temperature. The obtained nanoemulsion was transferred to a jacketed glass reactor having a bottom outlet under a nitrogen-inerted atmosphere at a temperature of 70 °C and moderate stirring (from 300 to 400 rpm). On the nanoemulsion 0.214 g of sodium persulfate P.A. was added. After 2 hours, more 0.121 g of sodium persulfate P.A. was added and after one more hour another 0.110 g of Sodium persulfate P.A. was added. After 4 hours of the polymerization process, the sample was transferred to a glass flask immersed in an ice bath, where it was kept under stirring for 30 minutes with the aid of a mechanical stirrer.

The obtained nanoencapsulated product was subjected to characterizations of particle size and zeta potential by dynamic light scattering, morphology by scanning electron microscopy, colloidal physical stability by dynamic scanning turbidimetry, total solids content by thermogravimetry, evaluation of the aspect after drying in the greenhouse, pH, quantification of residual monomers content in the final formulation and thermal profile by differential scanning calorimetry (DSC).

Table 9 shows the results of average particle size, pH, total solids content and residual monomers. As noted, the solids content was approximately 12.69% by mass, the average particle size was 337.1 nm and the polydispersity index was 0.379. The amount of residual monomers is less than 0.01% for methyl methacrylate and less than 0.05% for hydroxy ethyl methacrylate.

Table 9 - Results of the product obtained in Example 9.

| Size (nm) | IP | ZP | pH | Solids content (%) | Residual monomer (MMA) | Residual monomer (HEMA) |
|---|---|---|---|---|---|---|
| 337.1 | 0.379 | -77.70 | 6.3 | 12.69 | <0.01% | <0.05% |

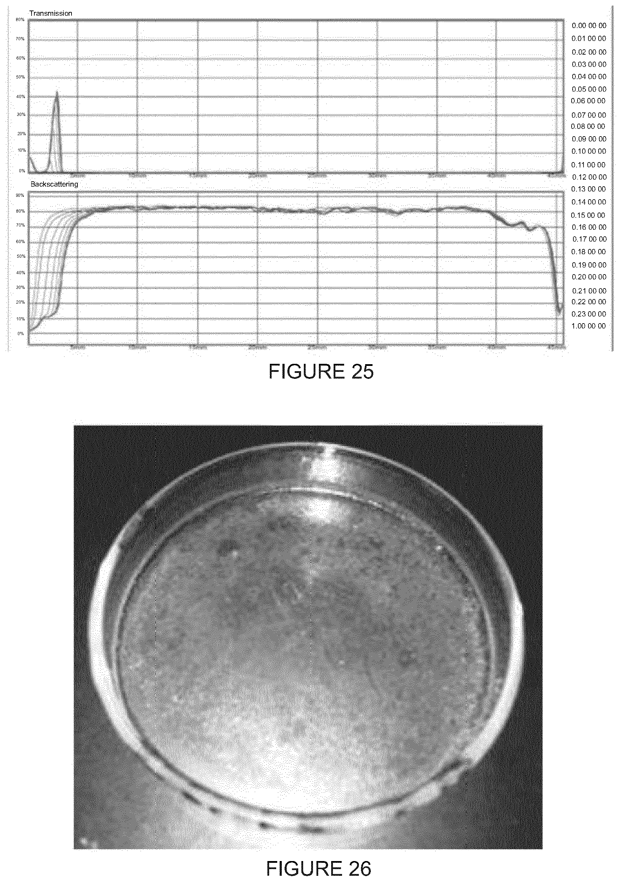

Figure 25 shows turbidimetry curves in function of the position of the sample in the sample holder, observing that the smaller the distance between the curves over the time of analysis, which in this case was 24 hours, the greater the colloidal physical stability of the nanocapsules in the aqueous medium. For this example, the product showed high physical stability in the analyzed period of time.

Figure 26 shows a photograph of a plate containing the product after reaction, exposed at a temperature above 40 °C in an air circulating oven. As can be seen, the appearance of the sample is "dry", i.e. without the presence of molten organic material, which undergoes melting at a temperature of 32 °C, indicating that it was nanoencapsulated by the emulsion polymerization process.

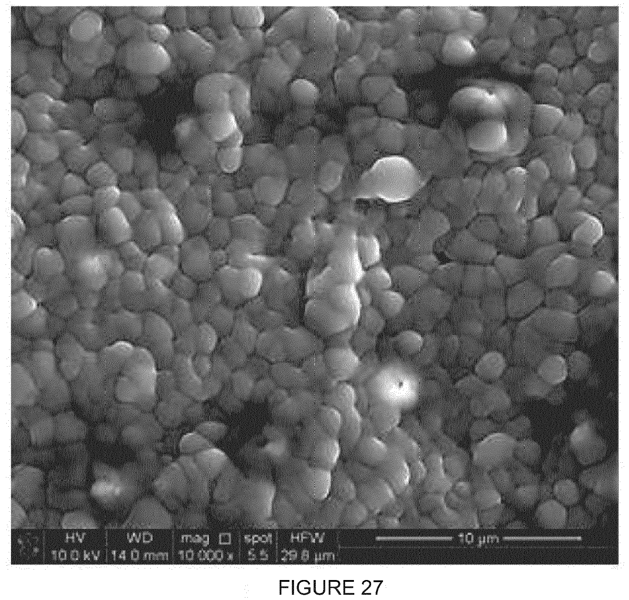

Figure 27 shows a photomicrograph of scanning electron microscopy of thermo-functional nanostructure of Example 9 and, as can be seen, the particle size was in the nanometer order.

Table 10 shows the evaluation results of the thermal profile covering the start melting temperature, the melting peak temperature and final melting temperature, as well as the enthalpy normalized by the evaluated nanoencapsulated PCM mass. The values shown refer to the 3 thermal analysis cycles.

Table 10 - Evaluation results of the thermal profile covering the start melting temperature, the melting peak temperature and final melting temperature, as well as the normalized enthalpy.

| ID | Cycles | "Onset" (°C) | "Endset " (°C) | Normalized enthalpy (J/g) |
|---|---|---|---|---|
| Thermo-functional nanostructure Ex 9 (1°C/min) | 1st | 28.58 | 35.43 | -116.96 |
| | 2nd | 25.08 | 34.51 | -98.89 |
| | 3rd | 25.10 | 34.52 | -98.63 |

Considering the values of enthalpy of fusion of the thermo-functional nanostructure, it was calculated the encapsulation efficiency value from the normalized melting enthalpy relationship of the first heating cycle of the PCM thermo-functional nanostructure with the enthalpy of the pure PCM normalized melting. The encapsulation efficiency was 100.07% having as reference the pure PCM enthalpy value of 116,07J/g.

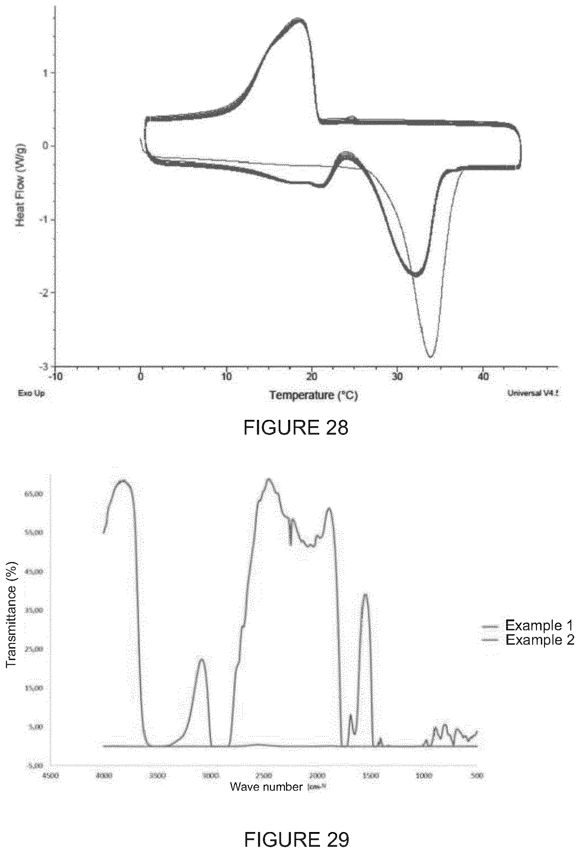

Figure 28 presents an evaluation of 20 cycles of heating and cooling by DSC, to demonstrate the maintenance of the thermal properties of the thermo-functional nanostructure, highlighting the cyclical effect of the PCM when subjected to temperature changes of the external environment (obs.: it is worth noting that the first heating curve has a slightly different profile of the others because the solidification of the nanoencapsulated has not been performed in a standardized manner, i.e. not in equipment, but at room temperature).

EXAMPLE 10: Evaluation of the ARTN efficiency in blocking infrared radiation.

To demonstrate the ARTN potential to block infrared radiation, a study of this radiation transmittance of a film containing ARTN produced as in Example 1 and a second containing colloidal oxide that reflects radiation was conducted. For carrying out this study, the product obtained in Example 2 and a conventional PCM obtained in parallel to this invention was used only to demonstrate the desired effect. The formation of the material films was obtained on a zinc selenide plate at a temperature of 40 °C and then brought to the incidence of infrared radiation using infrared spectroscopy equipment with Fourier transform.

Figure 29 shows an overlay of infrared spectra obtained in transmittance mode by using the films of the evaluated materials. As can be seen, ARTN blocked substantially all infrared radiation while the conventional PCM blocked only 50% of the radiation. This result demonstrates the ARTN ability to block infrared radiation and, thus, modify the heating profile of any surface on which it is applied. We should remember that this blockade is proportional to the concentration of the ARTN in the dispersion used for forming the film on the zinc selenide plate.

Example 11: Comparison of the properties of the infrared radiation reflectance of the thermo-functional nanostructure.

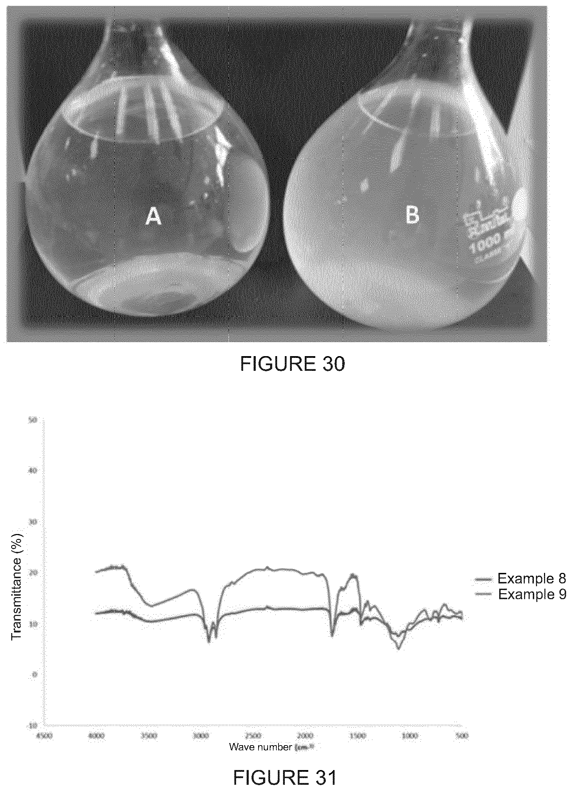

Figure 30 shows the photograph of the thermo-functional nanostructure suspension diluted to 5 ppm, synthesized without zinc oxide (A) compared with the same thermo-functional nanostructure with infrared radiation filter of Zinc oxide (B). It is observed the opacity effect of the suspension even in much diluted suspensions.

This visual effect is confirmed by the analysis of infrared radiation reflection through the infrared spectroscopy technique with courier transform (FTIR). Figure 31 shows comparative FTIR curves of thermo-functional nanostructure formulations containing infrared radiation filter of zinc oxide (Example 8) and the formulation not containing the filter (Example 9), dried over ZnSe crystal in an oven at 40 °C. It is observed that the sample of Example 8, containing zinc oxide, showed transmittance (10%) lower than the sample without the oxide (20%), indicating that this zinc oxide in the sample blocks the passage of infrared radiation by the product after film formation, proving the technical effect of the functional nanostructure.

EXAMPLE 12: Evaluation of the ARTN efficiency in regulating the temperature.

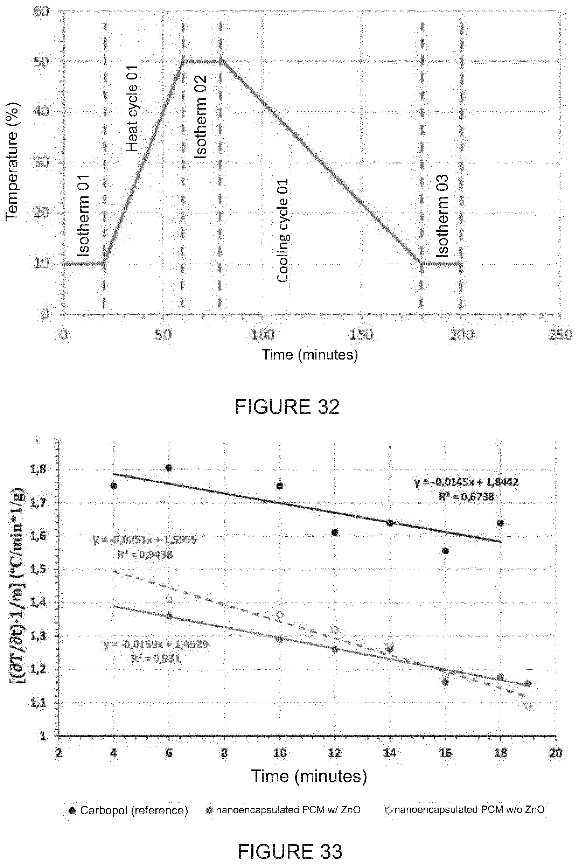

To conduct laboratory experiments (controlled environment) aiming validation (proof of concept) and comparative analysis of performance of the encapsulated PCMs, it was proposed the implementation of a study based on the thermal mapping of different samples subjected to a controlled programming of temperature variation of the external environment. To this end, the study started with the premise that the phase transformation process undergone by ARTN, endothermic in the case of melting (heating cycle) or exothermic in the case of re-crystallization (cooling cycle), restricts the temperature oscillations experienced by the sample impacting change in the rate of change of the respective quantity versus time. Existing interest and need to perform temperature measurements in non-contact mode, the IR thermography technique was used to monitor the temperature values. The planning and experimental design took into account the aspect of cyclical operation scheduled for the ARTNs and, therefore, established the temperature programming considered the heating ramps ($T_{onset}$ = 10 °C; $T_{endset}$ = 50 °C) and cooling ($T_{onset}$ = 50 °C; $T_{endset}$ = 10 °C) interspersed by isotherms (t = 20 minutes) in extreme temperature conditions, and it has been assessed a complete cycle of operation, as shown in Figure 32.

The thermal imaging record was done continuously throughout the experiment time interval, using an infrared camera model FLIR T400 WESTERN, having been established a frequency of image acquisition of 10 s. The software used for processing images obtained, and determining the respective temperature values was the "FLIR QUICKREPORT Version 1.2". Data processing has been taken into account individually for each sample tested, both the rate of change of its temperature versus time and the temperature gradient established in relation to the reference, both normalized in relation to the mass of the sample used. The analysis of the curves obtained was explored as a measure of efficiency adopted for comparative classification of the ARTNs.

In order to evaluate the performance of the ARTNs incorporated into the formulations, a first preliminary experiment was executed using the samples formulated, according to Examples 1, 2, 8 and 9, thickened with 0.5% (m/m) of Carbopol®. Approximately 1 g of each of the formulations prepared was disposed on an aluminum surface, separately following the positioning listed in Table 11.

Two reference samples were simultaneously tested without the addition of PCM, described as Carbopol® and 2 samples, in duplicate, of formulations with ARTNs containing zinc oxide (ZnO) - Examples 2 and 8, and 2 samples, in duplicate, of formulations without zinc oxide - Examples 1 to 9.

The aluminum surface containing the samples was subjected to a controlled program of temperature as set forth in Figure 33 and by using IR thermography technique thermal mapping of the surface of aluminum containing formulations was done, considering the temperature record versus time.

The comparative analysis of the formulations examined occurred by calculating the temperature variation rate experienced by the sample versus time (temperature) normalized by the total sample mass (value expressed in °C/min•g), according to the equation shown below:

$$Temperature\ variation\ rate = \frac{\partial T}{\partial t} \cdot \frac{1}{m_{sample}} = \frac{T_j - T_i}{t_j - t_i} \cdot \frac{1}{m_{sample}}$$

Equation 11

Where:

$m_{sample}$ = sample total mass
$T_j$ = temperature recorded for the sample at the $j^{th}$ time ($t_j$)
$T_i$ = temperature recorded for the sample at the $i^{th}$ time ($t_i$)

Figure 33 illustrates the results obtained showing the action effect related to the ARTN, which is expressed by means of a reduction in the temperature variation rate experienced by the sample during the cycle, which can be translated into practical terms of application as a higher perceived thermal comfort.

Another important aspect to be noticed in the presented set of results is that there is a difference of behavior of the samples when in the presence of zinc oxide (ZnO) embedded in the particles. Since said material fulfills the additional function to reflect infrared radiation (IR), the effect of thermal comfort tends to be intensified, i.e. reduction of the temperature variation rate experienced by the sample.

In order to demonstrate the effect of incorporating zinc oxide in the compositions, a second experiment was performed by using about 1 g of 2 samples of formulations containing zinc oxide (ZnO) - Examples 2 to 8 and 2 samples of formulations without zinc oxide - Examples 1 and 9, such as they were produced. The samples were placed on an aluminum surface, in separate, according to the positioning listed in Table 10.

The set was subjected to a temperature control programming using the IR thermographic technique, the thermal mapping of the device having been considering the temperature record versus time.

The comparative analysis of the formulations examined occurred by calculating the temperature variation rate experienced by the sample versus time normalized by the wax total mass present in different samples (value expressed in °C/min•g), according to the equation shown below:

$$Temperature\ variation\ rate = \frac{\partial T}{\partial t} \cdot \frac{1}{m_{sample}} = \frac{T_j - T_i}{t_j - t_i} \cdot \frac{1}{m_{NTRA}}$$

Equation 11

Where:

$m_{PCM}$ = wax total mass (PCM) constituting the sample
$T_j$ = temperature recorded for the sample at the $j^{th}$ time ($t_j$)
$T_i$ = temperature recorded for the sample at the $i^{th}$ time ($t_i$)

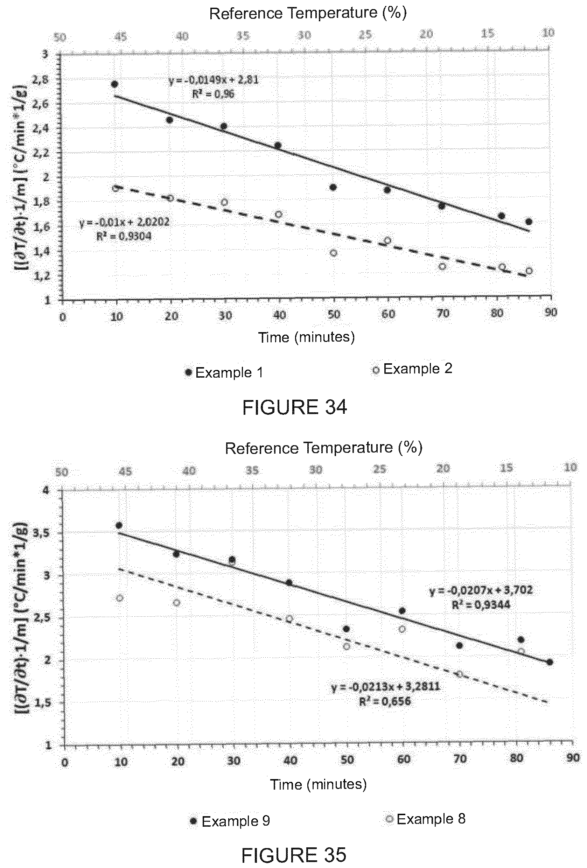

Figures 34 and 35 illustrate the effect of the presence of zinc oxide (ZnO) in the composition that appears as positive, proving, therefore, greater thermal comfort, which can be assessed by means of the reduction of the temperature variation rate experienced by the sample.

**Claims**

1. A nanoencapsulated temperature regulating agent, **characterized by** being a nanoencapsulated temperature regulating agent that exhibits morphology of the nanocapsule type, constituted by a core formed by an organic material that may melt/solidify, a polymeric shell and IV-radiation-filter nanoparticles incorporated into the nanostructure together with the organic material or on the surface of the nanostructure, constituting a part of the shell.

2. The nanoencapsulated temperature regulating agent according to claim 1, **characterized in that** the organic material is wax, butter, paraffin, salt or soluble polymer, or blends of these materials having melting/solidifying point ranging from 10 to 120°C.

3. The nanoencapsulated temperature regulating agent according to claim 2, **characterized in that** the organic material has melting/solidifying point ranging from 29 to 32°C.

4. The nanoencapsulated temperature regulating agent according to claim 1, **characterized in that** the IV-radiation filter is a colloidal oxide based on titanium, silica or zinc, with average particle size smaller than 200 nm.

5. The nanoencapsulated temperature regulating agent according to claim 4, **characterized in that** the colloidal oxide has average particle size smaller than 50 nm.

6. The nanoencapsulated temperature regulating agent according to claim 4, **characterized in that** the colloidal oxide is zinc oxide.

7. The nanoencapsulated temperature regulating agent according to claim 1, **characterized in that** the monomer used in forming the shell is of the cyanoacrylate type.

8. The nanoencapsulated temperature regulating agent according to claim 7, **characterized in that** the monomer used in forming the shell is butylcyanoacrylate.

9. The nanoencapsulated temperature regulating agent according to claim 1, **characterized in that** the mass ratio between the organic material / colloidal-oxide nanoparticle / monomer ranges from 47 : 35 : 16 to 92 : 0.01 : 7.99.

10. The nanoencapsulated temperature regulating agent according to claim 9, **characterized in that** the mass ratio between the organic material / colloidal-oxide nanoparticle / monomer is 73 : 15 :12.

11. The nanoencapsulated temperature regulating agent according to claim1, **characterized in that** contents of active organic material range from 5 to 35% by mass.

12. The nanoencapsulated temperature regulating agent according to claim 11, **characterized in that** the contents of active organic material is 28% by mass.

13. The nanoencapsulated temperature regulating agent according to claim 1, **characterized in that** the product exhibits characteristics of average particle size ranging from 50 to 3,000 nm, preferably from 150 to 300 nm, pH ranging from 2.0 to 10.0, preferably 4.2; solid contents from 5.0 to 50.0%, preferably 34%, spherical morphology and, when dried, it exhibits powder aspect, either partly agglomerated or in the form of dispersed particles and easy to disperse in an aqueous medium.

14. The nanoencapsulated temperature regulating agent according to claim 1, **characterized in that** the product exhibits the characteristics of average particle size ranging from 50 to 3,000 nm, pH ranging from 2.0 to 10.0, and solid contents ranging from 5.0 to 50.0%.

15. The nanoencapsulated temperature regulating agent according to claim 14, **characterized in that** the product exhibits the characteristics of average particle size ranging from 150 to 300 nm, pH of 4.2, solid contents of 34%.

16. The nanoencapsulated temperature regulating agent according to claim 1, **characterized in that** the product has spherical morphology and, when dried, it exhibits powder aspect, either partly agglomerated or in the form of dispersed particles and easy to redisperse in an aqueous medium.

17. The nanoencapsulated temperature regulating agent according to claim 1, **characterized in that** the product contains residues of non-ionic emulsifier and protective colloid of pre-formed polymers, functional ethylene monomers or bifunctional monomers that polymerize by polycondensation or polyaddition, used in the synthesis process.

FIGURE 1

FIGURE 2

FIGURE 3

FIGURE 4

FIGURE 5

FIGURE 6

FIGURE 7

FIGURE 8

FIGURE 9

FIGURE 10

FIGURE 11

FIGURE 12

FIGURE 13

FIGURE 14

FIGURE 15

| HV | WD | mag □ | spot | HFW | ———————— 20 µm ———————— |
| 20.0 kV | 9.4 mm | 5 000 x | 6.5 | 59.7 µm | |

FIGURE 16

FIGURE 17

FIGURE 18

FIGURE 19

FIGURE 20

FIGURE 21

FIGURE 22

FIGURE 23

FIGURE 24

FIGURE 25

FIGURE 26

FIGURE 27

FIGURE 28

FIGURE 29

FIGURE 30

FIGURE 31

FIGURE 32

FIGURE 33

FIGURE 34

FIGURE 35

## INTERNATIONAL SEARCH REPORT

| | International application No |
|---|---|
| | PCT/BR2016/050008 |

**A. CLASSIFICATION OF SUBJECT MATTER**
INV. C09K5/06
ADD.

According to International Patent Classification (IPC) or to both national classification and IPC

**B. FIELDS SEARCHED**

Minimum documentation searched (classification system followed by classification symbols)
C09K

Documentation searched other than minimum documentation to the extent that such documents are included in the fields searched

Electronic data base consulted during the international search (name of data base and, where practicable, search terms used)
EPO-Internal, WPI Data

**C. DOCUMENTS CONSIDERED TO BE RELEVANT**

| Category* | Citation of document, with indication, where appropriate, of the relevant passages | Relevant to claim No. |
|---|---|---|
| X | US 2007/031652 A1 (BELLEMARE JAMES V [US]) 8 February 2007 (2007-02-08) paragraphs [0002], [0014] - [0020]; figure; example ----- | 1-17 |
| X | US 2012/149265 A1 (MISTRY KISHOR KUMAR [GB] ET AL) 14 June 2012 (2012-06-14) examples ----- | 1-17 |
| X | US 2015/291868 A1 (RAJAGOPALAN SUMITRA [CA] ET AL) 15 October 2015 (2015-10-15) paragraphs [0001], [0007] - [0011], [0014], [0015], [0029], [0052] ----- -/-- | 1-17 |

[X] Further documents are listed in the continuation of Box C.   [X] See patent family annex.

* Special categories of cited documents :

"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 19 September 2016 | 27/09/2016 |

| Name and mailing address of the ISA/ European Patent Office, P.B. 5818 Patentlaan 2 NL - 2280 HV Rijswijk Tel. (+31-70) 340-2040, Fax: (+31-70) 340-3016 | Authorized officer Martinez Marcos, V |

Form PCT/ISA/210 (second sheet) (April 2005)

## INTERNATIONAL SEARCH REPORT

| International application No |
| --- |
| PCT/BR2016/050008 |

C(Continuation).    DOCUMENTS CONSIDERED TO BE RELEVANT

| Category* | Citation of document, with indication, where appropriate, of the relevant passages | Relevant to claim No. |
| --- | --- | --- |
| A | MENNIG M ET AL: "Multilayer NIR reflective coatings on transparent plastic substrates from photopolymerizable nanoparticulate sols", THIN SOLID FILMS, ELSEVIER-SEQUOIA S.A. LAUSANNE, CH, vol. 351, no. 1-2, 30 August 1999 (1999-08-30), pages 225-229, XP004183099, ISSN: 0040-6090, DOI: 10.1016/S0040-6090(99)00340-5 Introduction ----- | 1-17 |

Form PCT/ISA/210 (continuation of second sheet) (April 2005)

## INTERNATIONAL SEARCH REPORT
Information on patent family members

International application No

PCT/BR2016/050008

| Patent document cited in search report | Publication date | Patent family member(s) | Publication date |
|---|---|---|---|
| US 2007031652 A1 | 08-02-2007 | US 2007031652 A1<br>WO 2007019447 A2 | 08-02-2007<br>15-02-2007 |
| US 2012149265 A1 | 14-06-2012 | CN 102471672 A<br>EP 2449050 A1<br>JP 2012531510 A<br>KR 20120031300 A<br>US 2012149265 A1<br>WO 2011000688 A1 | 23-05-2012<br>09-05-2012<br>10-12-2012<br>02-04-2012<br>14-06-2012<br>06-01-2011 |
| US 2015291868 A1 | 15-10-2015 | EP 2917299 A1<br>US 2015291868 A1<br>WO 2014071528 A1 | 16-09-2015<br>15-10-2015<br>15-05-2014 |

Form PCT/ISA/210 (patent family annex) (April 2005)

36

**EP 3 406 689 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20070224899 A
- US 20090236079 A
- US 7919184 B
- KR 20130067128
- US 20130216834 A

### Non-patent literature cited in the description

- **BENDIGANAVALE, ASHWINI K. ; MALSHE, VINOD C.** Recent Patents on Chemical Engineering. *INFRARED REFLECTIVE INORGANIC PIGMENTS,* 2008, vol. 1, 67-79